# EUROPEAN PATENT SPECIFICATION

(11) **EP 3 128 708 B1**
(45) Date of publication and mention of the grant of the patent: **15.07.2020**
(21) Application number: 15772420.4
(22) Date of filing: 26.03.2015
(51) Int. Cl.: H04L 29/02, H04L 12/28, H04L 7/00, H04L 29/12, H04L 12/24, H04B 3/32, H04B 3/52, H04L 12/403

(54) **METHOD FOR PERFORMING PAIRING IN AN ACCESS NETWORK HAVING G.HN TECHNOLOGY APPLIED THERETO, ACCESS NETWORK MULTIPLEXER (GAM), ACCESS NETWORK TERMINAL (GNT), AND ACCESS NETWORK SYSTEM USING THE SAME**
VERFAHREN ZUR DURCHFÜHRUNG DER PAARUNG IN EINEM ZUGANGSNETZWERK MIT DARAUF ANGEWANDTER G.HN TECHNOLOGIE, NETZWERKZUGANGS-MULTIPLEXER (GAM), NETZWERKZUGANGS-TERMINAL (GNT) UND NETZWERKZUGANGS-SYSTEM, DIE DAS VERFAHREN NUTZEN
PROCÉDÉ POUR EFFECTUER UN APPARIEMENT DANS UN RÉSEAU D'ACCÈS AUQUEL EST APPLIQUÉ LA TECHNOLOGIE G.HN, ET MULTIPLEXEUR DE RÉSEAU D'ACCÈS (GAM), TERMINAL DE RÉSEAU D'ACCÈS (GNT) ET SYSTÈME DE RÉSEAU D'ACCÈS L'UTILISANT

(30) Priority: 01.04.2014 KR 20140038628; 01.04.2014 KR 20140038629; 01.04.2014 KR 20140038631; 01.04.2014 KR 20140038632; 21.10.2014 KR 20140142268
(43) Date of publication of application: 08.02.2017
(73) Proprietor: Ubiquoss Inc., Seongnam-si, Gyeonggi-do 463-400 (KR)
(72) Inventor: JUNG, Byung Gil, Seoul 150-073 (KR)
(74) Representative: Michalski Hüttermann & Partner Patentanwälte mbB
(86) International application number: PCT/KR2015/002975
(87) International publication number: WO 2015/152571

(56) References cited:
- US-A1- 2003 161 411
- US-A1- 2010 299 718
- US-A1- 2012 093 198
- US-A1- 2013 272 314
- US-A1- 2014 050 273
- ITU-T G.9961 (TELECOMMUNICATION STANDARDIZATION SECTOR OF ITU 30 June 2010, XP055359038

## Description

### BACKGROUND

The present invention relates to an access network providing gigabit rate Ethernet service by forming a G.hn domain in which an access network multiplexer (also calles as G.hn access multiplexer (GAM) or access multiplexer hearinafter) and access network terminals (also calles as a G.hn access terminal (GNT) or terminal hereinafter) are connected through a conventional phone line without adding or changing the line, and GIGA wire automatic pairing method using the access network. More specifically, by applying the G.hn specification to the conventional apartment equipped with a pair of phone line, gigabit rate service, 3-5 times faster than the conventional speed, is made possible without installing additional phone line, but the problem of crosstalk due to high frequencies arises. In this circumstance, the automatic Giga wire pairing method configures beforehand a domain name in the domain master and the end-point respectively before opening-up while the seed value is pre-configured at the domain master only, the pairing between the domain master and the end-point is made by sending the seed value in the MAP-D frame which the domain master sends to the end-point, and the configuration is automatically saved with protocol based MAC authentication. In this way the present invention prevents identifying different lines as the same lines and eliminates communication errors in the MAC authentication process between an operator and an installer.

Generally, gigabit rate service (1 Gbps) are replacing conventional 100 Mbps service and getting prevalent as the bandwidth provided to a subscriber are required to increase because of rapid increase of traffic.

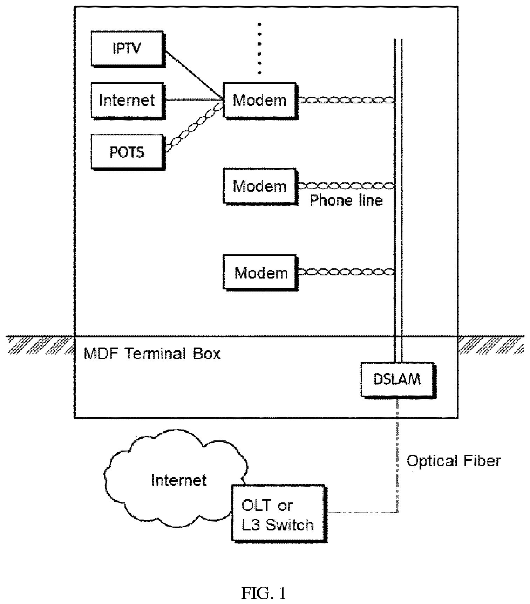

Fig. 1 is a block diagram for representing the access network configuration based on the conventional DSL.

Referring to Fig. 1, the optical fiber line is used for data communication between the upper layer communication equipment and digital subscriber line access multiplexer (DSLAM), and the phone line is used to transfer data between digital subscriber line access multiplexer (DSLAM) and the residential modem (Modem) in the conventional DSL based access network.

The conventional apartments or buildings constructed from 20 to 30 years ago are equipped with a pair of phone line. In case of decrepit apartments, for example, the wiring from MDF terminal box to a subscriber's house uses a pair of phone line. Hence, it is impossible to provide gigabit rate service for the conventional apartments or buildings in Korea (it is also true for a number of European territories where change of line is difficult due to ancient remains).

Such change of line or installation of additional line is impossible or, if possible, cumbersome to acquire consent of residents. Hence communication service providers want to increase bandwidth without change of line or installation of additional line.

Meanwhile, the G.hn to increase the bandwidth from 100 Mbps to 1 Gbps without installation of additional line is introduced.

For example, applying the G.hn specification to the access network consisting of a central office (CO) having multiple ports and multiple customer premises equipment (CPE) is an attempt to increase bandwidth from 100 Mbps to 1 Gbps.

While an access network using phone line can provide theoretically gigabit rate (1 Gbps) service by employing G.hn specification, it is, however, difficult to provide gigabit rate service in the access network because the crosstalk in adjacent lines in the access network consisting of a bundle cable causes identifying different lines as the same lines.

For example, the communications in an access network connected with phone lines is sensitive to the interference in a bundle cable; the interference between lines in the bundle cable is severe in the frequency band between 2 MHz and 100 MHz which the G.hn specification uses (while the crosstalk does not occur in a DSL-based access network since it uses low frequency band); and if a terminal is powered on (Power Up), a link is set up (Link Up), or data is sent or received, the line signal of other terminals is attenuated or distorted due to the interference.

Hence applying the G.hn specification to an access network requires a method eliminating the Near End crosstalk (NEXT).

Document US 2013/272314 A1 describes a communication system with a controller at a distribution point of said system, which controller is coupled to a plurality of customer premises transceivers via drop connections. The controller is configured to schedule upstream and downstream data transmissions across the drop connections such that they do not overlap from one drop connection to another thereby avoiding the effects of crosstalk.

Document US 2014/050273 A1 describes a robust mechanism to isolate transceivers that attempt to train on a FEXT channel during the handshake phase and to abort a false activation. Either or both transceiver acknowledges the unique identity of the other transceiver during the handshake phase.

### SUMMARY

The present invention is devised to solve problems of the conventional technology as described above and the objective of the present invention is to provide a GIGA wire automatic pairing method in a G.hn-based access network, which solves cumbersome problems occurring in the pairing process via MAC authentication between a domain master and an end-point having the factory default value as an initial seed, and uses given domain name and seed value to reduce the crosstalk caused by high frequency, but decides how to specify the domain name and seed value in access network system.

Another objective of the present invention is to provide a G.hn-based access network and a GIGA wire automatic pairing method preventing an error of saving a wrong seed value by establishing a protocol based MAC authentication in which at least each port of a domain master has a seed value and an end-point acquires a seed value in the opening-up process to eliminate inconvenience in the opening-up process in which a domain master and an endpoint having initial default values share a seed value with MAC authentication.

These objects are achieved by a method, an access network system, an access network terminal, as well as an access multiplexer having the features according to the respective independent claims.

As described above, the configuration of the present invention gives the following effects.

Firstly, the error of identifying different lines as the same lines cannot happen because a link is connected with a seed value and the MAC address is verified after connecting the link to form a domain.

Secondly, protocol-based MAC authentication is established and saved by the system so that the communication error between an operator and an installer.

Lastly, after activating a port and starting opening-up, all the process is carried out by the system from the initial step in which a domain master in G.hn access multiplexer (GAM) sends a MAP-D having a seed value to an end-point so that the present invention relieves pains of operators and installers and prevents errors due to the operators and installers.

### BRIEF DESCRIPTION OF THE DRAWINGS

For more complete understanding of this disclosure, reference is now made to the following brief description, taken in connection with the accompanying drawings and detailed description.
Fig. 1 shows a block diagram for representing the access network configuration based on the conventional DSL.
Fig. 2 shows a block diagram for the access network system forming a G.hn domain in accordance with the present invention and Fig. 3 shows a block diagram for representing the configuration of G.hn access multiplexer (GAM).
Fig. 4 and Fig. 5 show block diagrams for representing pairing method using MAC authentication in the access network being applied to G.hn specification in accordance with the present invention.
Fig. 6 shows a flow chart for illustrating the method applying the G.hn technology of the present invention to an access network in accordance with an embodiment of the present invention.
Fig. 7 and Fig. 8 show block diagrams for representing procedures before and after the opening-up forming a G.hn domain in accordance with the present invention.
Fig. 9 and Fig. 10 show flow charts for illustrating automatic pairing method for forming a G.hn domain in accordance with the present invention.

### DETAILED DESCRIPTION

The advantages, features, and the methods to achieve them are clarified in detail with reference to the embodiments in accordance with the present invention with accompanying figures.

However, the present invention is not limited to the embodiments described below but can be implemented in different and various ways; the present embodiments helps only to complete the implementation of the present invention and to inform those who have ordinary knowledge in the area the present invention belongs to about the complete category of the present invention; and the technical scope of the present invention is determined by the claims. The sizes of layers or areas and the relative sizes in the figures may be exaggerated for the purpose of clear explanation. Throughout the patent specification, the same reference mark designates the same component.

Hereinafter, the access network system being applied to G.hn technology in accordance with an embodiment of the present invention having the configuration described earlier is explained in detail with reference to accompanying figures.

The GIGA wire automatic pairing method in the present invention can be implemented in a G.hn specification based access network environment in which G.hn access multiplexer (GAM), of which multiple ports perform the function of domain master, and multiple terminals (GNT), which perform the function of end-points forming a G.hn domain, are connected with a bundle cable.

The G.hn specification based access network described earlier sends and receives signal synchronized at frequency between 20 Hz to 60 Hz in order to reduce crosstalk in the bundle cable and the domain master and the end-point can communicate with the synchronized signal using intrinsic seed value.

Particularly the domain master has an intrinsic seed before forming the G.hn domain but the end-point acquires the intrinsic seed in the domain forming procedure so as to reduce the crosstalk.

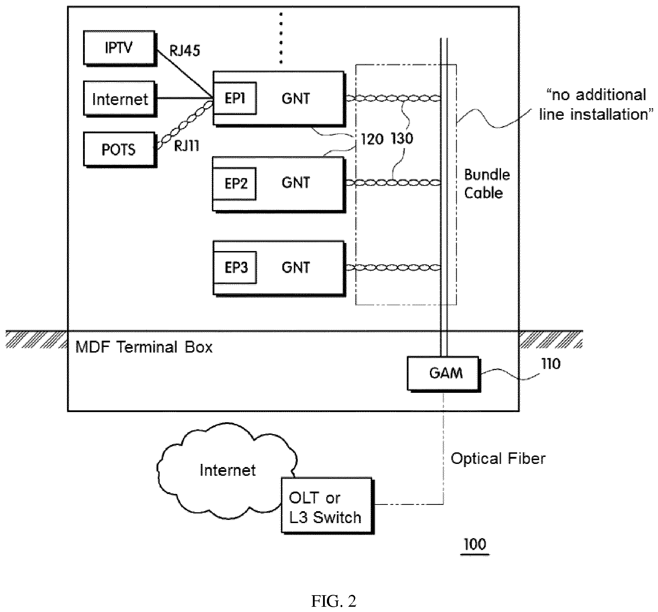

Referring to Fig. 2, the G.hn standard based access network system 100 reducing the crosstalk in a bundle cable in the present invention includes G.hn access multiplexer (GAM, or G.hn access multiplexer) 110 in which multiple ports function as domain masters; G.hn network terminal (GNT, or terminal) 120, which includes an end-point forming a G.hn domain with each domain master and has one-to-one correspondence with a domain master; and the phone line that connects the domain master and the end-point with a bundle cable 130.

The present invention applies G.hn standard to an access network to provide gigabit rate service. An embodiment in accordance with the present invention is described with an access network based on fiber to the phone line (FTTP). In case of FTTP based access network, for example, the G.hn access multiplexer (GAM) 110 is installed at MDF terminal box located in the basement of an apartment or a building or MDF terminal box located in every floor or every two or three floors and the terminal (GNT) 120 is installed at the subscriber side.

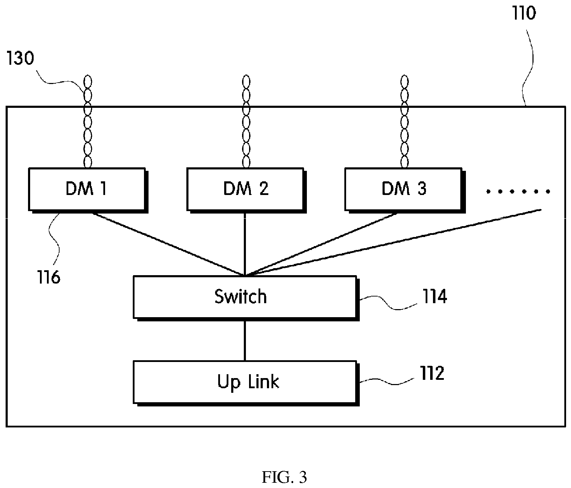

Referring to Fig. 3, the G.hn access multiplexer (GAM) 110 includes an uplink 112 connecting to the communication devices in the upper layer, a switch 114 providing synchronization signal to connected 8 or 24 domain masters, and a domain master consisting of 24 ports 116. Here the domain master (DM) defines a port 116 forming a G.hn domain with an end-point (EP).

The uplink 112 is connected with OLT in case of FTTH or with L3 aggregation switch in case of DSL. The uplink can be 1 Gigabit Ethernet (GE) or 10 GE.

The switch (114) converts one 1 GE or 10 GE into 24 lines of 1 GE.

The domain master allocates and controls resources (e.g. bandwidth, priority, etc.) of all end-points belonging to the domain, and monitors the status of end-points. In particular, the domain master controls sending and receiving data with end-points and other operations according to the medium access plan (MAP).

The end-point is connected to the domain master (DM) with a bundle cable using a phone line 130 and communicates with it synchronized at frequency between 20 Hz to 60 Hz.

The terminal (GNT) 120 is connected with in-house IPTV and the internet using RJ45 connector or equivalent connector, or with in-house POTS using RJ11 connector or equivalent connector.

The phone line 130 can be aggregated into a bundle of 24 lines. As a communication medium, the phone line 130 is shown as an example but it is not limited to the phone line but UTP cable can also be used. For example, a pair of UTP cable can be used as GIGA wire in a pair of conventional phone line 130 or 4 pairs of UTP cable. In addition, CPEV, F/S, TIV can be used for connection.

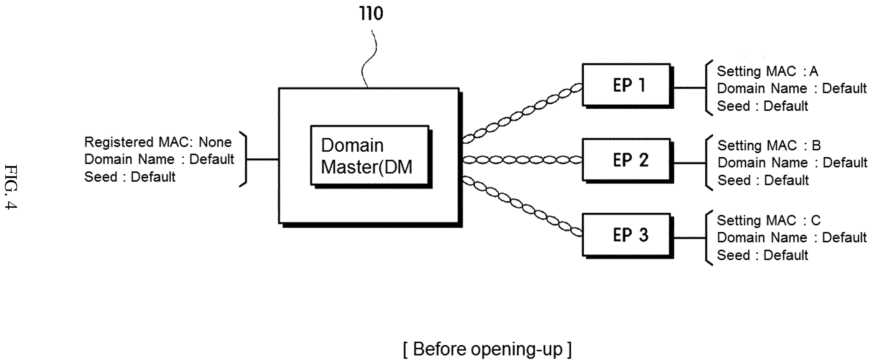

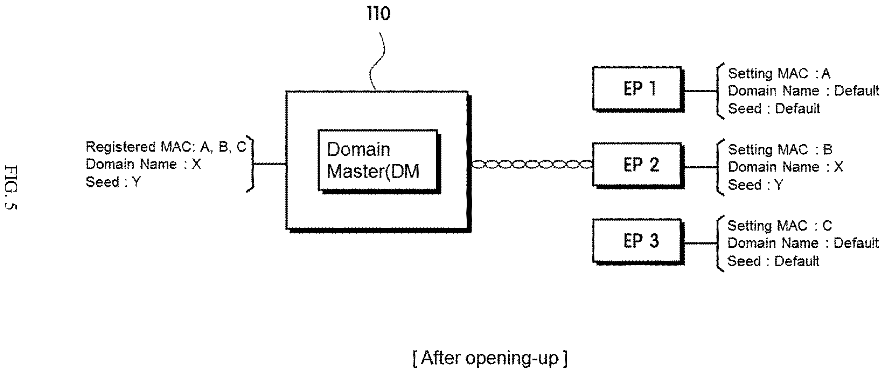

Fig. 4 is a block diagram for representing the access network being applied to G.hn specification before applying auto provisioning method using MAC authentication and Fig. 5 is a block diagram for representing the access network being applied to G.hn specification after applying the method.

Referring Fig. 4, to reduce crosstalk the G.hn access multiplexer (GAM) 110 and the domain master have a domain name and a seed value before opening-up (i.e. before applying the auto provisioning method). At the same time, the domain name and the seed value of the domain master and the end-points EP1, EP2, EP3 are set to a default value.

Referring Fig. 5, the operator registers MAC addresses of the specific end-points EP1, EP2, EP3 in the G.hn access multiplexer (GAM) 110 after opening-up (i.e. after applying the auto provisioning method). For example, the operator registers MAC addresses of a number of subscribers in the G.hn access multiplexer (GAM) 110. After registration, the G.hn access multiplexer (GAM) 110 searches the linked end-points EP1, EP2, EP3 to find the end-points EP1, EP2, EP3 having the same MAC addresses as the registered MAC addresses, and verifies registration or not of MAC addresses of end-points EP1, EP2, EP3 linked-up at the G.hn access multiplexer (GAM) 110.

Therefore, multiple end-points EP1, EP2, EP3 having MAC addresses registered at the G.hn access multiplexer (GAM) 110 can be linked up with it.

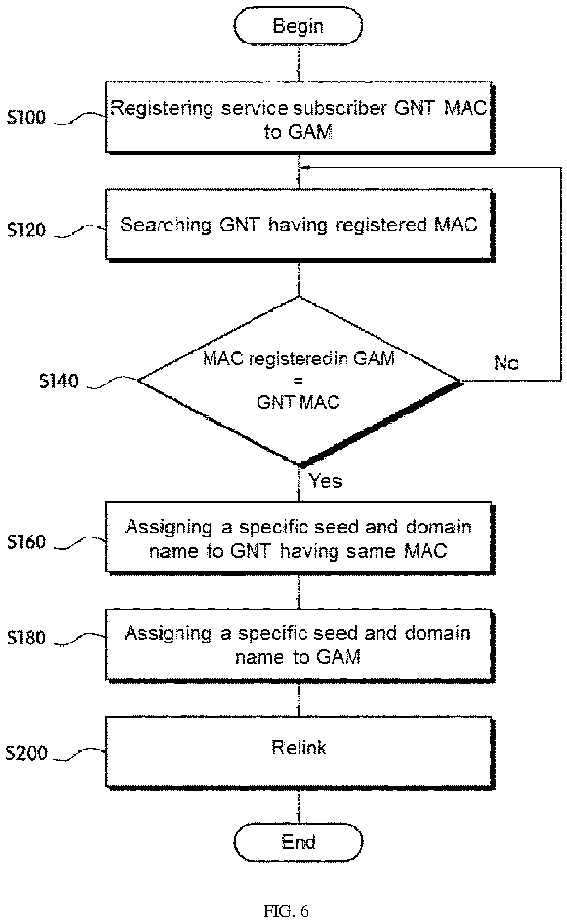

Fig. 6 is a flow chart for illustrating the method applying the G.hn technology of the present invention to an access network in accordance with an embodiment of the present invention.

Referring to Fig. 6, MAC addresses of service subscribers are registered at the G.hn access multiplexer (GAM) firstly (S100). In other words, the service operator registers the MAC addresses of multiple service subscriber terminals (CPE) at the G.hn access multiplexer (GAM).

The G.hn access multiplexer (GAM) searches terminals (CPE) having registered MAC addresses (S120), verifies agreement of the registered MAC address at the G.hn access multiplexer (GAM) and the MAC addresses of the terminal, and starts link-up with multiple terminals (CPE) having registered MAC addresses (S140).

Then, a specific seed value and domain name is given to a specific terminal (CPE) among terminals having registered MAC addresses (S160). In addition, the G.hn access multiplexer (GAM) sets up the same specific seed value and domain name given to the specific terminal (CPE) at the domain master (DM) so that the G.hn access multiplexer (GAM) can also have the same specific seed value and domain name given to the specific terminal (CPE) (S180).

Then, the G.hn access multiplexer (GAM) performs relink process to link the domain master (DM) in the G.hn access multiplexer (GAM) and the end-point in the terminal (CPE) using a specific domain name and seed value distinctly from others on a bundle cable so that it prevents crosstalk to keep the link from confusion and interference with other end-points (S200).

The pairing method described earlier improves crosstalk problem. But the seed values cannot be determined beforehand since it is unknown how domain masters (DM) and end-points EP1, EP2, EP3 are connected so that a default value is set up at factory shipment and additional opening-up process using MAC authentication between an operator and an installer is used.

However, the opening-up process can be cumbersome. Particularly when the domain master and the end-points EP1, EP2, EP3 are wired in opening-up process, the operator and the installer perform MAC authentication by remotely reading the label attached to the equipment but this opening-up process incurs a lot of errors in reading or listening the MAC address. In some cases, the label having the MAC address can often be lost in transportation or opening-up processes so that the installer cannot inform the operator of the MAC address.

Hence another embodiment of the present invention suggests a method to facilitate the opening-up process and reduce crosstalk at the same time.

As described above, the domain master (DM) and the end-point (EP) sends and receives signal synchronized at the specific frequency between 20 Hz to 60 Hz to reduce the crosstalk in a bundle cable.

Particularly in communicating with each other, the domain master (DM) and the end-point (EP) have an intrinsic seed to prevent identifying different lines as the same lines due to the crosstalk among adjacent lines in the bundle cable.

The domain master has an intrinsic seed before forming the G.hn domain. On the other hand, the end-point acquires the intrinsic seed during the G.hn domain forming procedure.

As described earlier, for example, the domain master (DM) uses a kind of control signal, MAP-D frame, to monitor data transmission with the end-point (EP) and the seed value of the domain master (DM) inserted in the MAP-D frame is sent to the end-point.

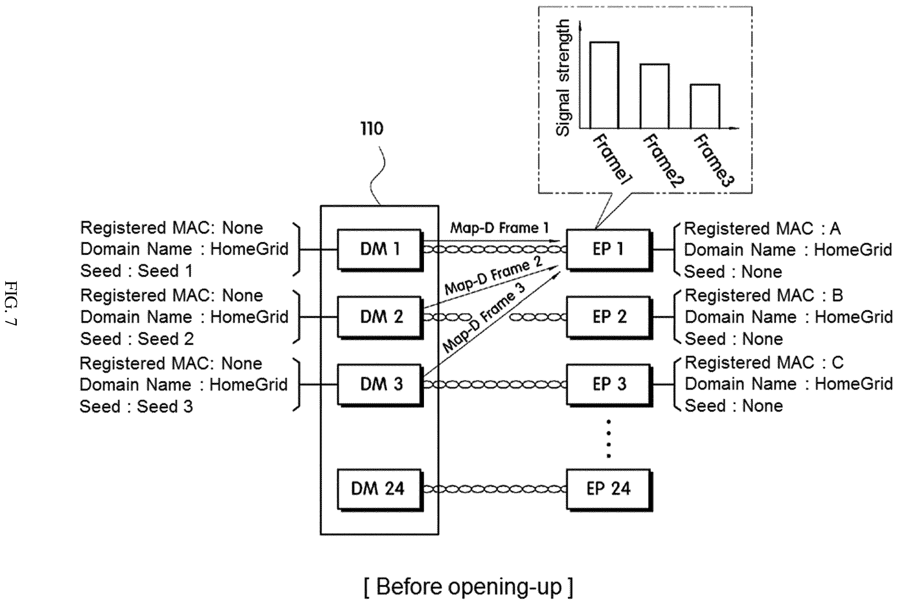

Referring to Fig. 7, the domain name of "HomeGrid" and the seed value of "Seed 1" for the first domain master (DM1), the domain name of "HomeGrid" and the seed value of "Seed 2" for the second domain master (DM2), the domain name of "HomeGrid" and the seed value of "Seed 3" for the third domain master (DM3) are determined at the time of factory shipment.

Contrarily the domain names of "HomeGrid" for the first end-point EP1, the second end-point EP2, and the third end-point EP3 are determined at the time of factory shipment but the seed values are not determined.

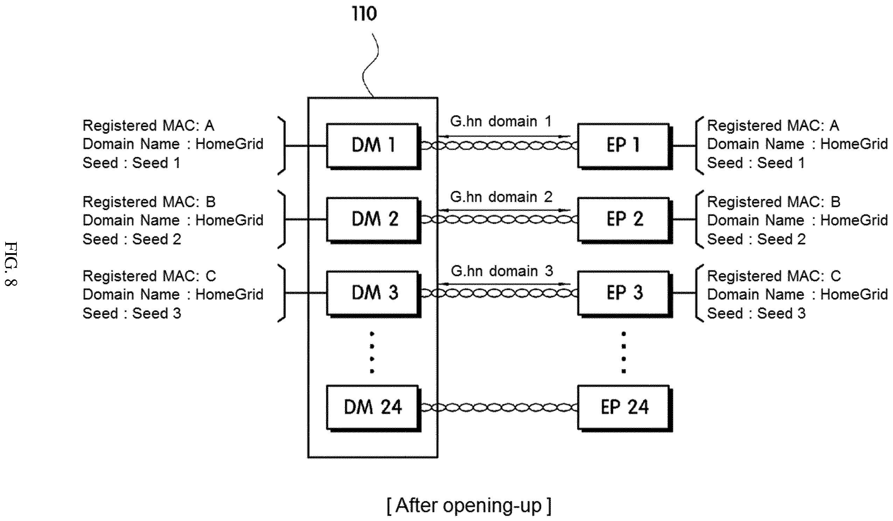

Referring to Fig. 8, the seed values for the first end-point EP1, the second end-point EP2, and the third end-point EP3 are determined by the pairing procedure of the opening-up process corresponding to the seed values of the domain masters DM1, DM2, DM3.

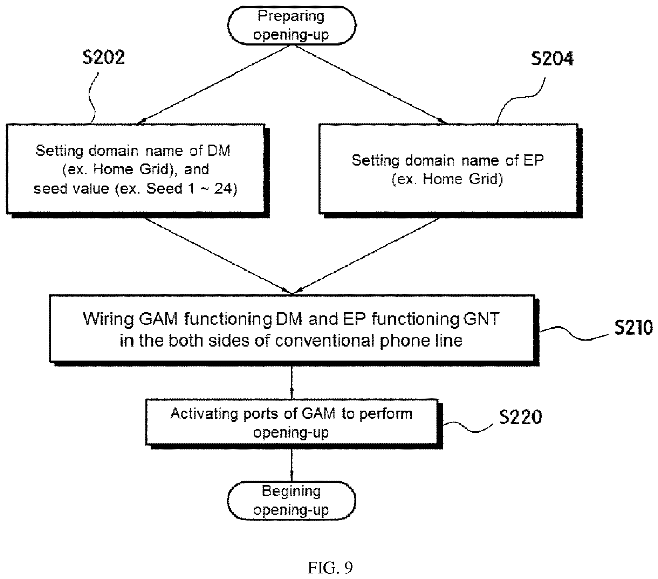

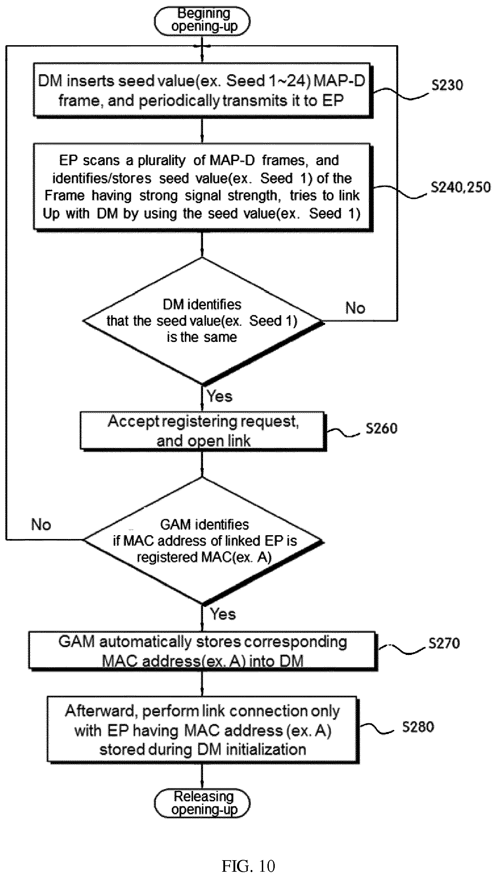

Hereinafter, with reference to Fig. 9 and Fig. 10, the opening-up process in which the domain master (DM) and the end-point (EP) form a G.hn domain on the access network is explained.

### <Preparation step before opening-up>

The domain name and the seed value for the domain master (DM) are determined beforehand (S202).

For example, the domain name of the domain master is defined as "HomeGrid", and the seed values are defined as "Seed 1", "Seed 2", "Seed 3", ..., "Seed 298", "Seed 299", and etc so that an intrinsic seed value is given to each domain master. Normally, when the bundle cable consists of 24 pairs of phone line 130, the seed value can be determined from 1 to 24 and it can be varied with respect to the number of installed G.hn access multiplexer (GAM) 110.

The domain name for the end-point is determined beforehand (S204). But the seed value is not determined beforehand.

Since the domain master (DM) forms a G.hn domain with multiple end-points, the domain name of an end-point (EP) can be determined as "HomeGrid" beforehand. But the seed value cannot be determined since it is unknown how a domain master (DM) and an end-point (EP) are connected.

Before the opening-up, all ports performing domain master function in the G.hn access multiplexer (GAM) are in deactivated state.

### <Auto pairing step after opening-up>

The wiring between the G.hn access multiplexer (GAM) 110 for a port to be opened and the terminal (GNT) 120 is connected (S210).

The installer installs the terminal (GNT) 120 at the site and the G.hn access multiplexer (GAM) 110 and the terminal (GNT) 120 are wired at both ends of the conventional phone line 130.

The operator activates the port 116 to be opened functioning as domain master and notifies the start of pairing for the port to be opened (S220).

The operator activates the port 116 to be opened upon the request of the installer. The opening-up procedures performed by the operator have completed at this step in the present invention. Afterwards the opening-up process is automatically performed by the system and a G.hn domain is formed by pairing each domain master and end-points.

The domain master sends the MAP-D frame including a preset seed value to the end-point (EP) before the start of pairing (S230).

The domain master inserts the preset seed value of it into a MAP-D frame at the preparation time of pairing and sends the frame to the end-point at the start time of pairing. Here the MAP-D frame is used to control registration and allocation or other operations as a G.hn communication protocol and in the present invention the seed value is inserted into the MAP-D frame.

The end-point (EP) receives a number of MAP-D frames and it identifies the seed value of the strongest MAP-D frame among received MAP-D frames and saves the seed value (S240).

As described earlier, when each port 116 functioning as domain master activates, the G.hn access multiplexer (GAM) (110) generates the MAP-D frame and sends it to the end-point (EP), and the end-point receives the MAP-D frame through filtering and modulation.

At this time, the end-point (EP) connected with the domain master (DM) by a phone line 130 scans a number of MAP-D frames (e.g. Frame 1, 2, 3) received from multiple domain masters (DM) through the bundle cable. The end-point also selects the MAP-D frame (e.g. Frame 1) having the strongest signal among a number of signals. By this way, the seed value (e.g. Seed 1) inserted in the MAP-D frame (e.g. Frame 1) is extracted and the end-point (EP) starts the registration procedure.

The end-point (EP) tries link-up with the domain master (DM) with the identified seed value (S250).

Since the end-point forms a link with the domain master using the intrinsic seed value as such, it cannot link with other physically adjacent end-points not forming the same domain.

The domain master admits a registration request having the same seed value and starts link-up process (S260).

The G.hn access multiplexer (GAM) 110 forms a G.hn domain using MAC address of the endpoint requesting registration because it has the information on MAC addresses of end-points before opening-up.

The G.hn access multiplexer (GAM) 110 verifies the MAC address of the linked end-point and sets the corresponding MAC as registered in the domain master, and it automatically saves the MAC address of the corresponding port into the domain master (DM) (S270).

The procedure to save the MAC address is automatically performed by protocol and the operator does not intervene in saving the MAC address of a terminal (GNT) 120.

Then the G.hn access multiplexer (GAM) 110 establishes the MAC addresses saved in the domain master at the initialization of domain master (DM) and the domain master (DM) sets up a link only with the end-points having the MAC addresses (S280).

For example, when the G.hn access multiplexer (GAM) 110 is powered on after blackout or re-activated from the deactivated state, the domain master (DM) identifies end-points (EP) having the established MAC addresses and sets up links so that a wrong G.hn domain is not formed among adjacent phone lines 130.

The end-point (EP) tries link-up with the saved seed value at the start of link-up procedure but if the link is not connected for a specified period of time, the end-point (EP) deletes the saved seed and repeats the above procedures.

### <Opening-up release step>

The operator deletes the pairing information of the releasing port 116 (S310).

The G.hn access multiplexer (GAM) 110 deletes the MAC address of the end-point saved at the corresponding port 116 (S320).

The operator deactivates (Shutdown) the released port 116 (S330).

As explained above, the present invention relates a G.hn standard based access network system connecting the G.hn access multiplexer (GAM) in which multiple ports functions as domain masters and multiple terminals (GNT) which function as end-points forming a G.hn domain with the domain masters with a bundle cable and implementing automatic pairing method between the domain master and the end-point; the technical scope of the present invention includes the configuration that fundamentally prevents forming a wrong G.hn domain including not identical lines in which before the opening-up, the seed value is saved at the time of factory shipment and after the opening-up, the seed value inserted in the MAP-D frame is extracted and saved to the end-point. With regard to the technical scope of the present invention, various embodiments are made possible by those who have ordinary knowledge in the area the present invention belongs to.

## Claims

1. A method for access network pairing, between a domain master (DM) and an end-point (EP) for forming a G.hn domain between a G.hn access multiplexer (110) and one of a plurality of G.hn access network terminals (120), each connected to the G.hn access multiplexer (110) by a corresponding phone line (130) of a bundle of cables, wherein the G.hn access multiplexer (110) comprises a plurality of ports (116), each of these ports (116) performs a function of a domain master out of which one is the domain master (DM) for the access network pairing, the method comprises:
setting up domain name and unique seed value of the domain master (DM) (S202);
setting up domain name of the end-point (EP) (S204);
connecting wire between the G.hn access multiplexer (110) and the G.hn access network terminal (120) for the corresponding port (116) of the G.hn access multiplexer (110) to be opened (S210);
activating the port (116) to be opened functioning as the domain master (DM), which domain master (DM) sends a MAP-D frame including the unique seed value to the end-point (EP), and starting pairing;
in the domain master (DM), inserting the unique seed value into MAP-D frames, and transmitting the MAP-D frames to the end-point (EP) (S230);
in the end-point (EP), receiving the MAP-D frames and identifying the seed value of the strongest signal of MAP-D frame among received MAP-D frames (S240);
in the end-point (EP) trying to link-up with the domain master (DM) by using the identified seed value (S250);
in the domain master (DM), accepting registration request with the unique seed value of said domain master (DM) and starting to connect the link (S260);
in the G.hn access multiplexer (110), identifying the MAC address of the linked-up end-point (EP), setting up the MAC address as a registered address into the domain master (DM), and automatically storing the MAC address into the domain master (DM) (S270); and
in the G.hn access multiplexer (110), setting up the MAC addresses stored in the domain master (DM) during initializing process, and connecting the link only with the end-point (EP) having the stored MAC addresses (S280).

2. A G.hn-based access network system (100) comprising:
a G.hn access multiplexer (110) with a plurality of ports (116), whereby each port has a domain master (DM), and
a plurality of G.hn access network terminals (120) which are connected to the ports (116) of the access multiplexer (110) by phone lines in a bundle of cables, whereby each G.hn access network terminal (120) performs a function of an end-point (EP);
**characterized in that**
the access network system (100) is configured to perform the method according to claim 1 for forming a respective G.hn domain among the G.hn access multiplexer (110) and the G.hn access network terminals (120).

3. The Ghn-based access network system of claim 2, wherein the G.hn access multiplexer (110) comprises:
an uplink connected to a FTTH-based OLT or DSL-based L3 aggregation switch with 1GE or 10GE;
a switch (114) converting one 1GE or 10GE into 24 1GE connections;
24 ports; and each domain master (DM) of one of the 24 ports (116) correlating to one of the 24 1 GE connections forms a G.hn domain with one of the end-points (EP),
wherein the initials FTTH are an abbreviation for Fiber to the Home, the initials OLT are an abbreviation for Optical Line Termination and the initials GE are an abbreviation for Gigabit Ethernet.

4. The access network system of claim 3, wherein the G.hn access multiplexer (110) is configured to be installed at an MDF terminal box and connected to the upper layer communication equipment including an OLT or an L3 aggregation switch;
the G.hn access network terminal (120) is configured to be installed at a subscriber side and connected with in-house IPTV, Internet and POTS,
wherein the initials MDF are an abbreviation for Main distribution Frame, the initials IPTV are an abbreviation for Internet Protocol Television, and the initials POTS are an abbreviation for Plain old Telephone Service.

5. A G.hn access network terminal (120) for use in a Ghn-based access network system (100) according to claim 2, whereby the G.hn access network terminal (120) is configured to perform a function of an end-point (EP) and to perform the method according to claim 1 for forming a G.hn domain among the G.hn access multiplexer (110) and the G.hn access network terminal (120).

6. A G.hn access multiplexer (110) for use in a Ghn-based access network system (100) according to claim 2 comprising:
an uplink (112) communicating with upper layer communication equipment using optical fiber;
a switch (114) converting one 1 Gigabit Ethernet or 10 Gigabit Ethernet into 24 1 Gigabit Ethernet connections; and
24 ports (116), whereby each port (116) has a function of a domain master (DM),
and each domain master of one of the 24 ports (116) correlating to one of the 24 1 Gigabit Ethernet connections,
wherein the G.hn access multiplexer (110) is configured to perform the method according to claim 1 for forming a G.hn domain among the G.hn access multiplexer (110) and a G.hn access network terminal (120).

## Patentansprüche

1. Verfahren zum Paaren in einem Zugangsnetzwerk von einem Domänen-Master (DM) und einem Endpunkt (EP) zum Bilden einer G.hn-Domäne zwischen einem G.hn-Zugangs-Multiplexer (110) und einem einer Vielzahl von G.hn-Zugangsnetzwerk-Endgeräten (120), die jeweils über eine entsprechende Telefonleitung (130) eines Kabelbündels mit dem G.hn-Zugangs-Multiplexer (110) verbunden sind, wobei der G.hn-Zugangs-Multiplexer (110) eine Vielzahl von Ports (116) umfasst, wobei jeder dieser Ports (116) eine Funktion eines Domäne-Masters durchführt, von denen einer der Domäne-Master (DM) für das Paaren in einem Zugangsnetzwerk ist, wobei das Verfahren umfasst:
Einrichten eines Domänenamens und eines eindeutigen Grundwerts des Domäne-Masters (DM) (S202);
Einrichten eines Domänenamens für den Endpunkt (EP) (S204) ;
Verbinden von Draht zwischen dem G.hn-Zugangs-Multiplexer (110) und dem G.hn-Zugangsnetzwerk-Endgerät (120) zum Öffnen des entsprechenden Ports (116) des G.hn-Zugangs-Multiplexers (110) (S210);
Aktivieren des zu öffnenden Ports (116), der als der Domäne-Master (DM) dient, wobei der Domäne-Master (DM) einen MAP-D-Rahmen, der den eindeutigen Grundwert einschließt, an den Endpunkt (EP) sendet, und Starten des Paarens;
Einfügen des einmaligen Grundwerts in MAP-D-Rahmen und Übertragen der MAP-D-Rahmen an den Endpunkt (EP) im Domäne-Master (DM) (S230);
Empfangen der MAP-D-Rahmen und Identifizieren des Grundwerts des stärksten Signals des MAP-D-Rahmens in den empfangenen MAP-D-Rahmen im Endpunkt (EP) (S240);
Versuch einer Anbindung an den Domäne-Master (DM) unter Verwendung des identifizierten Grundwerts im Endpunkt (EP) (S250);
Akzeptieren einer Registrierungsanforderung mit dem einmaligen Grundwert des Domäne-Masters (DM) und Beginnen der Verbindung des Links im Domäne-Master (DM) (S260);
Identifizieren der MAC-Adresse des angebundenen Endpunkts (EP), Einrichten der MAC-Adresse als eine registrierte Adresse im Domäne-Master (DM) und automatisches Speichern der MAC-Adresse im Domäne-Master (DM) im G.hn-Zugangs-Multiplexer (110) (S270); und
Einrichten der im Domäne-Master (DM) während des Initialisierungsprozesses gespeicherten MAC-Adressen und Verbinden des Links nur mit dem Endpunkt (EP) mit den gespeicherten MAC-Adressen im G.hn-Zugangs-Multiplexer (110) (S280).

2. G.hn-basiertes Zugangsnetzwerksystem (100), umfassend:
einen G.hn-Zugangs-Multiplexer (110) mit einer Vielzahl von Ports (116), wobei jeder Port einen Domäne-Master (DM) aufweist, und
eine Vielzahl von G.hn-Zugangsnetzwerk-Endgeräten (120), die mit den Ports (116) des Zugangs-Multiplexers (110) über Telefonleitungen in einem Kabelbündel verbunden sind, wobei jedes G.hn-Zugangsnetzwerk-Endgerät (120) eine Funktion eines Endpunkts (EP) durchführt;
**dadurch gekennzeichnet, dass**
das Zugangsnetzwerksystem (100) zum Durchführen des Verfahrens nach Anspruch 1 zum Bilden einer jeweiligen G.hn-Domäne unter dem G.hn-Zugangs-Multiplexer (110) und den G.hn-Zugangsnetzwerk-Endgeräten (120) ausgelegt ist.

3. G.hn-basiertes Zugangsnetzwerksystem nach Anspruch 2, wobei der G.hn-Zugangs-Multiplexer (110) umfasst:
einen Uplink, der mit einem auf FTTH basierenden OLT- oder einem auf DSL-basierenden L3-Aggregations-Switch mit 1GE oder 10GE verbunden ist;
einen Switch (114), der ein 1GE oder 10GE in 24 1GE-Verbindungen umwandelt;
24 Ports; und
wobei jeder Domäne-Master (DM) eines der 24 Ports (116), die mit einer der 24 1GE-Verbindungen korrelieren, eine G.hn-Domäne mit einem der Endpunkte (EP) bildet,
wobei die Initialen FTTH eine Abkürzung für "Fiber to the Home" sind, die Initialen OLT eine Abkürzung für "Optical Line Termination" sind und die Initialen GE eine Abkürzung für "Gigabit Ethernet" sind.

4. Zugangsnetzwerksystem nach Anspruch 3, wobei der G.hn-Zugangs-Multiplexer (110) zum Installieren an einer MDF-Endgerätebox und zum Anschließen an die Einrichtung zur Kommunikation auf höherer Ebene ausgelegt ist, die einen OLT- oder einen L3-Aggregations-Switch beinhaltet;
das G.hn-Zugangsnetzwerk-Endgerät (120) zum Installieren an einer Teilnehmerseite und zum Anschließen an IPTV, Internet und POTS im Haus ausgelegt ist,
wobei die Initialen MDF eine Abkürzung für "Main Distribution Frame" sind, die Initialen IPTV eine Abkürzung für "Internet Protocol Television" sind und die Initialen POTS eine Abkürzung für "Plain old Telephone Service" sind.

5. G.hn-Zugangsnetzwerk-Endgerät (120) zur Verwendung in einem G.hn-basierten Zugangsnetzwerksystem (100) nach Anspruch 2, wobei das G.hn-Zugangsnetzwerk-Endgerät (120) zum Durchführen einer Funktion als Endpunkt (EP) und zum Durchführen des Verfahrens nach Anspruch 1 zum Bilden einer jeweiligen G.hn-Domäne unter dem G.hn-Zugangs-Multiplexer (110) und den G.hn-Zugangsnetzwerk-Endgeräten (120) ausgelegt ist.

6. G.hn-Zugangs-Multiplexer (110) zur Verwendung in einem G.hn-basierten Zugangsnetzwerksystem (100) nach Anspruch 2, umfassend:
einen Uplink (112), der mit einer Einrichtung zur Kommunikation auf höherer Ebene unter Verwendung von Lichtwellenleitern kommuniziert;
einen Switch (114), der ein 1-Gigabit-Ethernet oder 10-Gigabit-Ethernet in 24 1-Gigabit-Ethernet-Verbindungen umwandelt; und
24 Ports (116), wobei jeder Port (116) eine Funktion eines Domäne-Masters (DM) aufweist,
und wobei jeder Domäne-Master einer der 24 Ports (116) mit einer der 24 1-Gigabit-Ethernet-Verbindungen korreliert,
wobei der G.hn-Zugangs-Multiplexer (110) zum Durchführen des Verfahrens nach Anspruch 1 zum Bilden einer G.hn-Domäne unter dem G.hn-Zugangs-Multiplexer (110) und einem G.hn-Zugangsnetzwerk-Endgerät (120) ausgelegt ist.

## Revendications

1. Procédé pour l'appariement de réseau d'accès, entre un maître de domaine (DM) et un point d'extrémité (EP) pour former un domaine G.hn entre un multiplexeur d'accès G.hn (110) et l'un d'une pluralité de terminaux de réseau d'accès G.hn (120), chacun relié au multiplexeur d'accès G.hn (110) par une ligne téléphonique correspondante (130) d'un faisceau de câbles, dans lequel le multiplexeur d'accès G.hn (110) comprend une pluralité de ports (116), chacun de ces ports (116) effectue une fonction d'un maître de domaine parmi lesquels l'un est le maître de domaine (DM) pour l'appariement de réseau d'accès, le procédé comprend :
le paramétrage de nom de domaine et de valeur de départ unique du maître de domaine (DM) (S202) ;
le paramétrage de nom de domaine du point d'extrémité (EP) (S204) ;
la connexion filaire entre le multiplexeur d'accès G.hn (110) et le terminal de réseau d'accès G.hn (120) pour le port correspondant (116) du multiplexeur d'accès G.hn (110) pour qu'il soit ouvert (S210) ;
l'activation du port (116) pour qu'il soit ouvert fonctionnant en tant que maître de domaine (DM), lequel maître de domaine (DM) envoie une trame MAP-D incluant la valeur de départ unique au point d'extrémité (EP) et démarrant l'appariement ;
dans le maître de domaine (DM), l'insertion de la valeur de départ unique dans des trames MAP-D, et l'émission des trames MAP-D vers le point d'extrémité (EP) (S230);
dans le point d'extrémité (EP), la réception des trames MAP-D et l'identification de la valeur de départ du signal le plus fort de trame MAP-D parmi les trames MAP-D reçues (S240) ;
dans le point d'extrémité (EP), la tentative d'établissement de liaison avec le maître de domaine (DM) en utilisant la valeur de départ identifiée (S250) ;
dans le maître de domaine (DM), l'acceptation de demande d'enregistrement avec la valeur de départ unique dudit maître de domaine (DM) et le démarrage de connexion de la liaison (S260) ;
dans le multiplexeur d'accès G.hn (110), l'identification de l'adresse de MAC du point d'extrémité ayant établi la liaison (EP), le paramétrage de l'adresse MAC en tant qu'adresse enregistrée dans le maître de domaine (DM), et le stockage automatique de l'adresse MAC dans le maître de domaine (DM) (S270) ; et
dans le multiplexeur d'accès G.hn (110), le paramétrage des adresses MAC stockées dans le maître de domaine (DM) pendant le processus d'initialisation, et la connexion de la liaison seulement avec le point d'extrémité (EP) ayant les adresses MAC stockées (S280).

2. Système de réseau d'accès basé sur G.hn (100) comprenant :
un multiplexeur d'accès G.hn (110) avec une pluralité de ports (116), de sorte que chaque port a un maître de domaine (DM), et
une pluralité de terminaux de réseau d'accès G.hn (120) qui sont reliés aux ports (116) du multiplexeur d'accès (110) par des lignes téléphoniques dans un faisceau de câbles, de sorte que chaque terminal de réseau d'accès G.hn (120) effectue une fonction d'un point d'extrémité (EP) ;
**caractérisé en ce que**
le système de réseau d'accès (100) est configuré pour effectuer le procédé selon la revendication 1 pour former un domaine G.hn respectif parmi le multiplexeur d'accès G.hn (110) et les terminaux de réseau d'accès G.hn (120).

3. Système de réseau d'accès basé sur G.hn selon la revendication 2, dans lequel le multiplexeur d'accès G.hn (110) comprend :
une liaison montante reliée à un commutateur d'agrégation L3 basé sur DSL ou OLT basé sur FTTH avec 1GE ou 10GE ;
un commutateur (114) transformant une seule 1GE ou /10GE en 24 connexions 1GE ;
24 ports ; et
chaque maître de domaine (DM) de l'un des 24 ports (116) se corrélant à l'une des 24 connexions 1GE forme un domaine G.hn avec l'un des points d'extrémité (EP),
dans lequel les initiales FTTH sont une abréviation pour Fibre jusqu'à la Maison, les initiales OLT sont une abréviation pour Terminaison de Ligne Optique et les initiales GE sont une abréviation pour Ethernet Gigabit.

4. Système de réseau d'accès selon la revendication 3, dans lequel le multiplexeur d'accès G.hn (110) est configuré pour être installé au niveau d'une boîte terminale MDF et relié à l'équipement de communication de couche supérieure incluant un commutateur d'agrégation OLT ou L3 ;
le terminal de réseau d'accès G.hn (120) est configuré pour être installé au niveau d'un côté abonné et relié à une IPTV domestique, Internet et POTS,
dans lequel les initiales MDF sont une abréviation pour Trame de distribution Principale, les initiales IPTV sont une abréviation pour Télévision par Protocole Internet et les initiales POTS sont une abréviation pour Service Téléphonique ancien Simple.

5. Borne de réseau d'accès G.hn (120) à utiliser dans un système de réseau d'accès basé sur G.hn (100) selon la revendication 2, de sorte que le terminal de réseau d'accès G.hn (120) est configuré pour effectuer une fonction d'un point d'extrémité (EP) et pour effectuer le procédé selon la revendication 1 pour former un domaine G.hn parmi le multiplexeur d'accès G.hn (110) et le terminal de réseau d'accès G.hn (120).

6. Multiplexeur d'accès G.hn (110) à utiliser dans un système de réseau d'accès basé sur G.hn (100) selon la revendication 2 comprenant :
une liaison montante (112) communiquant avec un équipement de communication de couche supérieure utilisant de la fibre optique ;
un commutateur (114) transformant un seul Ethernet 1 Gigabit ou Ethernet 10 gigabits en 24 connexions Ethernet 1 Gigabit ; et
24 ports (116), de sorte que chaque port (116) a une fonction d'un maître de domaine (DM), et chaque maître de domaine d'un des 24 ports (116) se corrélant à l'une des 24 connexions Ethernet 1 Gigabit,
dans lequel le multiplexeur d'accès G.hn (110) est configuré pour effectuer le procédé selon la revendication 1 pour former un domaine G.hn parmi le multiplexeur d'accès G.hn (110) et un terminal de réseau d'accès G.hn (120) .
